# EUROPÄISCHE PATENTSCHRIFT

(11) **EP 0 866 002 B1**
(45) Veröffentlichungstag und Bekanntmachung des Hinweises auf die Patenterteilung: **07.05.2003**
(21) Anmeldenummer: 98103108.1
(22) Anmeldetag: 23.02.1998
(51) Int. Cl.: B65G 1/137, B65G 1/04

(54) **Verfahren und Vorrichtung zum automatischen Kommissionieren von Artikeln**
Method and device for the automatic order picking of articles
Méthode et dispositif pour préparer automatiquement des commandes d'articles

(30) Priorität: 24.02.1997 DE 19714455
(43) Veröffentlichungstag der Anmeldung: 23.09.1998
(73) Patentinhaber: P+P Materialfluss-Systeme GmbH, 04639 Schmölln-Nitzschka (DE)
(72) Erfinder: Behrends, Hajo, Dipl.-Ing., 90402 Nürnberg (DE)
(74) Vertreter: Hanke, Hilmar

(56) Entgegenhaltungen:
- DE-U- 29 703 230
- GB-A- 2 205 822
- US-A- 3 750 804

## Beschreibung

Die Erfindung betrifft einen Kommissionierautomaten gemäß dem Oberbegriff des Anspruchs 1 sowie Verfahren zum Einlagern und Auslagern gemäß den Ansprüchen 7 und 11.

Ein aus DE 35 33 382 A1 bekannter Kommissionierautomat der vorgenannten Art besitzt ein rechnergesteuertes Regalbediengerät in Form von einzelnen rechnergesteuerten Abgabevorrichtungen. Die Abgabevorrichtungen befinden sich jeweils am unteren Ende eines jeden schrägen Schachtes, die, sofern vom Rechner angesteuert, einzelne Artikel auf ein Förderband im freien Fall abgeben. Das Förderband verläuft parallel in Längsrichtung des Regals. Bei zwei parallelen Regalen verläuft das Förderband zwischen beiden Regalen an einer unteren Stelle. Die Artikel werden von Hand einer Bedienungsperson von der Regalhinterseite, d.h. von der dem Förderband abgewandten Regalseite in die einzelnen schrägen Schächte eingegeben. Von Nachteil ist die Kommissionierung im freien Fall, wodurch die Artikel beschädigt werden können. Außerdem kann ein kommissionierter Artikel aufgrund der Streuung bei einem freien Fall nur bedingt gezielt auf ein vorbeilaufendes Förderband abgegeben werden. Wesentlicher Nachteil sind die begrenzte Regalhöhe, d.h. die begrenzte Lagerkapazität, sowie das manuelle Einlagern. Die Regalhöhe ist im Normalfall auf Mannhöhe begrenzt. Bei höheren Regalen müssen Zwischenstockwerke vorgesehen sein, um die Regale von Hand in größerer Höhe befüllen zu können.

Ein gattungsgemäßer Kommissionierautomat ist aus der US-A-3 750 804 bekannt.

Aufgabe der Erfindung ist die Schaffung eines Kommissionierautomaten der eingangs genannten Art sowie ein Verfahren zum automatischen Kommissionieren von Artikel mit Hilfe des Kommissionierautomaten, der auch bei größeren, d.h. übermannhohen Regalen auf einfache Weise zuverlässig, schnell und insbesondere vielseitig das oder die Regale bedient, je nachdem, wie die Software des Rechners ausgelegt ist.

Gelöst wird die der Erfindung zugrundeliegende Aufgabe durch einen Kommissionierautomaten der im Anspruch 1 angeführten Art. Vorteilhaft weitergebildet ist der Kommissionierautomat durch die Merkmale der abhängigen Ansprüche 2 bis 6.

Erfindungsgemäße Regalbedienungsverfahren kennzeichnen sich durch die Merkmale der Ansprüche 7 bis 14.

Wesen der Erfindung ist, daß das dem Regal zugeordnete separate Regalbediengerät eine bei jedem Schachtende positionierbare, rechnergesteuerte Bedienungseinheit sowohl für ein Auslagern, vorzugsweise stückweises Auslagern, als auch für ein Einlagern von Artikeln aufweist.

Es können zwei gegenüberliegende geradlinige voneinander beabstandete Regalreihen vorgesehen sein, wobei das Regalbediengerät in der dazwischenliegenden Regalgasse längsmittig angeordnet und in Längsrichtung des Regals verfahrbar oder verschieblich ist.

Die Bedienungseinheit des Regalbediengeräts ist durch einen rechnergesteuerten ersten Antrieb in Längsrichtung des Regals, gegebenenfalls auch auf die andere Außenlängsseite des Regals, verfahrbar und durch einen rechnergesteuerten zweiten Antrieb höhenverstellbar.

Die Bedienungseinheit besitzt einen guerverlaufenden Tisch, auf welchem ein- oder ausgelagerte Artikel in Regalquerrichtung zwischengelagert werden können.

Der Tisch ist in Regalquerrichtung durch einen rechnergesteuerten dritten Antrieb querverstellbar.

Im Tisch sind ein in Regalquerrichtung verlaufender, rollengeführter, rechnergesteuerter, erster Endlos-Antrieb und ein in Regalquerrichtung verlaufender, rollengeführter, rechnergesteuerter, zweiter Endlos-Antrieb zur Horizontalförderung von Artikeln auf dem Tisch ausgebildet, wobei der erste Endlos-Antrieb zum Auslagern von Artikeln aus einem ausgewählten Schacht und der zweite Endlos-Antrieb zum Einlagern von Artikeln in einem ausgewählten Schacht vorgesehen sind.

Der zweite Endlos-Antrieb ist mittig im querverlaufenden Tisch angeordnet, während der erste Endlos-Antrieb beidseits des zweiten Endlos-Antriebes symmetrisch zu diesem Antrieb verläuft.

Der zweite Endlos-Antrieb umfaßt zweckmäßigerweise zumindest einen hervorstehende Artikelanschlag, vorzugsweise drei auf dem Endlos-Umfang des zweiten Endlos-Antriebs gleich verteilte Artikelanschläge, und ist insbesondere als Kettentrieb ausgebildet, wobei der Artikelanschlag senkrecht an einer Kettenlasche des Kettentriebs befestigt ist.

Der Artikelanschlag ist in besonderer Ausgestaltung mittig unterteilt, wobei die beiden Anschlaghälften seitlich vom Kettentrieb gelegen sind.

Der Tisch weist insbesondere auch einen Artikelanschlag-Zentrierer auf.

Mit Vorteil können der erste und gegebenenfalls auch der zweite Endlos-Antrieb Umkehrtriebe sein, welche in beiden Regalquerrichtungen unabhängig voneinander betrieben werden können.

Der erste Endlos-Antrieb kann ein oder mehrere synchrone Flach-Riementriebe sein.

Mit Vorteil ist bzw. sind jedoch der erste Endlos-Antrieb ein oder mehrere synchrone Rund-Riementriebe.

Der querverlaufende Tisch besitzt insbesondere zumindest an seinem einen Ende mittig einen Bedienfinger, in welchem auch der erste und der zweite Endlos-Antrieb integriert ausgebildet ist, wobei der Bedienfinger bei einer Auslagerung eines ausgewählten schachtuntersten Artikels oder bei einer Einlagerung eines Artikels vom Tisch in einen ausgewählten Schacht mit der Bodenseite dieses Artikels in Eingriff bringbar ist.

Der Boden eines Schachts bzw. jeder Flachboden des Regals umfaßt an der schachtunteren, dem Regalbediengerät zugewandten Seite eine zentrale Aussparung, welche geringfügig größer als der Bedienfinger in Draufsicht ist, wobei bei einem bei einem unteren Schachtende positionierten Regalbediengerät der Bedienfinger berührungsfrei in der Aussparung aufnehmbar ist, d.h. berührungsfrei nach oben oder nach unten hindurchbewegt werden kann.

Das untere Ende des Schacht- oder Flachbodens weist zumindest einen hochstehenden Haltezinken auf, welcher vorzugsweise höhen- und/oder seitenverstellbar ist, oder mit aufsteckbaren Zusatzformblechen in Form und Größe veränderbar ist.

Die Schachtdeckwand ist bezüglich des Haltezinkens regalseitig zurückversetzt und besitzt einen nach oben abgewinkelten Rand, welcher die Funktion eines Ein- und Auslagerns von Artikeln in einem Schacht erleichtert oder sichert.

Besitzt das Regal anstelle von Schächten Flachböden, ist zweckmäßigerweise im Deckenbereich eines Flachbodens ein bezüglich des hochstehenden Haltezinkens regalseitig zurückversetzter nach oben abgewinkelter Niederhalter vorgesehen.

Der Tisch kann auch eine verstellbare Artikel-Seitenführung aufweisen, sowie einen höhenverstellbaren Artikel-Niederhalter.

Mit Vorteil sind der höhenverstellbare Artikelniederhalter und die verstellbare Artikel-Seitenführung auf jeder Seite des zweiten Endlos-Antriebs eine abgewinkelte Leitschiene, wobei beide Leitschienen bezüglich der Querachse des Tisches synchron bzw. gleichzeitig verstellbar sind und auch den Zentrierer für den Artikelanschlag bilden können.

Der Artikelanschlag weist bevorzugt, gesehen in Regallängsrichtung, eine abgerundete Form auf.

Einzelne Rollen des ersten und des zweiten Endlos-Antriebes können auf einer gemeinsamen Achse gelagert sein.

Jeder Schacht besitzt zweckmäßigerweise am unteren Ende ein Positionierblech zum Auffinden des Regalortes mit Hilfe einer systemeigenen Sensorik.

Das Regal kann längsendseitig zumindest eine Auslaßrutsche für kommissionierte Artikel aufweisen, welche entgegengesetzt zu den Schächten gegenüber der Horizontalen geneigt ist.

Ein Verfahren zum automatischen Auslagern von Artikeln mit Hilfe eines vorgenannten Kommissionierautomaten sieht die im Anspruch 7 definierten Verfahrensschritte vor.

Hierbei kann der gleiche Schacht nochmals oder ein anderer ausgewählter Schacht entsprechend angefahren und bedient werden, bis der Auslagerungs- bzw. Kommissionierauftrag abgeschlossen ist oder der Tisch vollständig mit ausgelagerten Artikeln bestückt ist.

Mit einem mit Artikeln bestückten Tisch kann das Regalbediengerät durch die systemeigenen Antriebe zu einer auf der Längsseite des Regals oder zwischen zwei Regalen gelegenen Übergabestelle bewegt werden, an welcher durch Betätigung des ersten oder des zweiten Endlos-Antriebes die auf dem Tisch zwischengelagerten Artikel einem Auffangbehälter und/oder einem Förderband bzw. einer Auslaßrutsche abgeben werden.

Besitzt ein Kommissionierautomat zumindest zwei gegenüberliegende voneinander beabstandete Regale, kann bei einer Bedienung eines gegenüberliegenden Regals zumindest der erste Endlos-Antrieb umgeschaltet und der Artikelanschlag des zweite EndlosAntriebs auf der anderen Tischquerseite positioniert werden.

Neben einem vorgenannten Auslagern von Artikeln kann ein erfindungsgemäßes Verfahren auch zum automatischen Einlagern von Artikeln mit Hilfe eines erfindungsgemäßen Kommissionierautomaten verwendet werden. Das Einlagerungsverfahren kennzeichnet sich durch die im Anspruch 11 definierten Merkmale.

Der gleiche Schacht kann hierbei nochmals oder ein anderer ausgewählter Schacht entsprechend angefahren und bedient werden, bis der Einlagerungsauftrag abgeschlossen ist.

Sieht der Kommissionierautomat zumindest zwei gegenüberliegende voneinander beabstandete Regale vor, wird bei einer Bedienung eines gegenüberliegenden Regals der Tisch seitenverkehrt betrieben und der Artikelanschlag des zweite Endlos-Antriebs vor einem Einschieben der Artikel in den Schacht auf der anderen Tischquerseite positioniert.

Es versteht sich, daß durch das Regalbediengerät ausgewählte Artikel aus Schächten ausgelagert und die ausgelagerten, auf dem Tisch der Bedienungseinheit zwischengelagerten Artikel an anderer Regalstelle eingelagert, d.h. ausgewählte Artikel im Regal umgelagert werden können.

So können zum Beispiel Artikel von Hand einer Bedienungsperson in niederer Höhe in das Regal eingelagert werden, und es können anschließend diese Artikel an höherer Stelle im Regal automatisch mittels Regalbediengerät umgelagert werden, an Stellen, die von Hand einer Bedienungsperson nicht erreichbar sind.

Desgleichen können auch umsatzschwache Kommissionsartikel an regalhoher Stelle regalseitenentfernt umgelagert werden und umsatzstarke Artikel in die Nähe der Abgabe- bzw. Übergabestation im Regal plaziert werden, um kurze Wegstrecken bei oft verlangten Kommissionsartikeln einzurichten.

Die Erfindung eignet sich auch zum Einlagern von Artikeln auf der hinteren Regallängsseite bei den dortigen schachtoberen Schachtenden. Dabei kann auf den zweiten Endlos-Antrieb verzichtet werden. Die Artikel werden durch den ersten Endlos-Antrieb einfach in die ausgewählten oberen Schachtenden eingeben und rutschen den Schacht hinunter bis zum hintersten dort gelagerten Artikel, oder bis zum Haltezinken.
Um das Regalbediengerät mit seinem Bedienfinger an ausgewählten oberen Schachtenden auf der Regalrückseite anzuordnen und zu positionieren, fährt das Regalbediengerät insgesamt auf dann verlegten Schienen um das Regal an einem Regallängsende herum. Macht das Regalbediengerät eine 180°-Umkehrung, kann auf einen Umkehrantrieb des ersten Endlos-Antriebs verzichtet werden. Die oberen Schachtenden weisen jeweils Aussparungen wie die unteren Schachtenden auf, und der Bedienfinger paßt in diese Aussparungen wie auf der Schachtunterseite.

Durch die Erfindung wird somit eine Entnahmeeinheit zur automatischen Ein- und Auslagerung von Artikeln bzw. Produkten, vorzugsweise kubischen Produkten, aber auch Tüten mit planer steifer Bodenfläche, aus einem Regalsystem geschaffen.

Die Entnahmeeinheit ist Teil eines fahrbaren Roboters bzw. Regalbediengeräts. Der Roboter ermöglicht das Verfahren der Entnahmeeinheit an jeden beliebigen Ort eines Regalsystems in der sogenannten X- und Y-Achse (Regal-Längsachse bzw. Regal-Hochachse).

Das Regalsystem kann beispielsweise zweiseitig aufgebaut werden. Die Entnahmeeinheit ist so konstruiert, daß sie beide Seiten des Regalsystems bedienen kann. Die Entnahmeeinheit kann quer zur Fahrtrichtung ins Regalsystem eingreifen, in der sogenannten Z-Achse (Regal-Querachse), um Artikel zu bearbeiten.

Hauptfunktion der Entnahmeeinheit ist das automatische Einund Auslagern von Artikeln von einer bzw. von zwei Seiten des Regalsystems.

Die Artikel lagern im Regalsystem auf Fachböden oder in Schächten, die um einen bestimmten Winkel geneigt sind, damit die Artikel eigenständig gegen den Haltezinken, also in die Entnahmeposition, rutschen.

Das Auslagern von Artikeln erfolgt beispielsweise über einen Riementrieb, der mit Hilfe eines Motors angetrieben wird. Der Riementrieb kann in beide Richtungen betrieben werden, um ein Auslagern von beiden Seiten zu ermöglichen. Zur Entnahme wird der Entnahme- oder Bedienfinger durch die Aussparung zwischen den Haltezinken gehoben. Hierbei wird der Artikel durch den Riemen erfaßt und herausgefördert. Der nachfolgende Artikel rutscht gegen die "Nase" des Entnahemefingers, d.h. gegen die vorderste Tischquererstreckung, und kann dadurch nicht mitgefördert werden. Nach einem erneuten Absenken des Entnahmefingers kann der nächste Artikel ausgelagert werden. Ein Vereinzeln der Artikel ist dadurch möglich. Die Artikel können auf der Entnahmeeinheit zwischengelagert werden, wenn mehrere verschiedene Regalorte angefahren werden.

Das automatische Einlagern kann ebenso erfolgen. Hierzu wird ein Artikelanschlag oder Schieber verwendet, der die Artikel in die jeweilige Richtung schiebt. Vor dem Einschieben werden die Artikel mit Hilfe eines Zentrierers auf der Entnahmeeinheit genau ausgerichtet und zentriert, um ein Verhaken bei der Einlagerung zu vermeiden. Der Schieber kann an einer umlaufenden Kette befestigt werden. Diese Kette wird mit Hilfe eines Motors angetrieben. Der Kettenmotor und der Riemenmotor können unabhängig voneinander (in der Geschwindikeit und in der Drehrichtung) betrieben werden . An der Kette können mehrere Schieber befestigt werden, um die Durchlaufzeit der Kette zu verkürzen. Der Schieber hat zwei Funktionen. Er schiebt die Artikel in das Regalsystem ein und fungiert als Anschlag beim Auslagern. Hierzu wird der Schieber vor der Auslagerung immer auf die gegenüberliegende Seite verfahren, um die ausgelagerten Artikel abzufangen. Der Schieberkopf hat eine spezielle abgerundete Form, um das Schieben der Artikel in das Regalsystem zu optimieren. Dieser Kopf ist mit einer Kettenlasche fest verbunden. Der Schieber ist geteilt, um ein Gegenbiegen der Kette über ein Zahnrad zu ermöglichen. Das Kettenrad und die Riemenrolle sind auf einer gemeinsamen Achse gelagert. Die Durchmesser sind aufeinander abgestimmt. Die Kette wird in einer Nut geführt, um eine Berührung mit den Artikel zu vermeiden.

Zur Entnahemeeinheit gehört ein beweglicher Tisch, auf dem sie montiert ist. Es sind drei Positionen erforderlich (rechts, mittig (Grundstelllung), links), um ein Ein- und Auslagern zu ermöglichen. Der bewegliche Tisch ist auf einem Grundgestell befestigt. Dieses Grundgestell wird vom Regalbediengerät zum jeweiligen Regalort verfahren.

Durch ein Positionierblech am Regalort kann der Robotor sich selbst mit Hilfe einer geeigneten Sensorik positionieren.
Ein Auffinden des Regalortes erfolgt automatisch und kann durch das Positionierblech korrigiert werden.

Die Erfindung wird nachfolgend anhand von Ausführungsbeispielen unter Bezugnahme auf die beigefügte Zeichnung näher beschrieben; es zeigen:
- Fig. 1: einen Kommissionierautomat in einer schematischen Stirnansicht mit zwei gegenüberliegenden Regalen und einem zwischengeordneten Regalbediengerät,
- Fig. 2: das Regalbediengerät nach Fig. 1,
- Fig. 3: das Regalbediengerät nach Fig. 2 in einer Seitenansicht mit Darstellung der höhenverstellbaren Bedienungseinheit,
- Fig. 4: die Bedienungseinheit nach Fig. 3 in größerer Einzelheit,
- Fig. 5: die Bedienungseinheit nach Fig. 4 in einer Stirnansicht, gesehen in Längsrichtung der Regale, mit Darstellung des querverlaufenden querverstellbaren Tisches,
- Fig. 6: eine schematische Ansicht des Tisches nach Fig. 5 mit Darstellung des zweiten integrierten Endlos-Antriebes,
- Fig. 7: den Tisch nach Fig. 6 in einer schematischen Draufsicht mit Darstellung des integrierten rechnergesteuerten ersten und zweiten Endlos-Antriebs,
- Fig. 8: den Tisch nach Fig. 7 in einem schematischen Vertikalschnitt längs der Linie A-A der Fig. 7, mit Darstellung eines tischoberen Artikelanschlags,
- Fig. 9: den Tisch nach den Fig. 8 in einem schematischen Vertikalschnitt längs der Linie B-B der Fig. 6,
- Fig. 10: das linke Tischende der Fig. 7 in Draufsicht in größerer Einzelheit,
- Fig. 11: den Artikelanschlag mit einem Abschnitt des zweiten Endlos-Antriebs in einer Draufsicht,
- Fig. 12: den Artikelanschlag nach Fig. 11 in einer schematischen Seitenansicht bei einem linksseitigen Einlagern eines auf dem Tisch zwischengelagerten Artikels,
- Fig. 13: einen Schacht eines Regals mit linkem Haltezinken in einer schematischen Seitenansicht, Stirnansicht und Draufsicht,
- Fig. 14: zwei benachbarte untere Schachtenden mit Haltezinken, Positionierblechen und einem zwischengeordneten Haltezinken-Aufsteckblech,
- Fig. 15 bis 17: Zwischenschritte eines Auslagerns/links eines Artikels (aus einem nicht veranschaulichten linken Regalschacht), gesehen im Tischbereich ähnlich Fig. 6,
- Fig. 18 bis 20: Zwischenschritte eines Auslagerns/rechts eines Artikels (aus einem nicht veranschaulichten rechten Regalschacht), gesehen im Tischbereich,
- Fig. 21 bis 28: Zwischenschritte eines Auslagerns/rechts, gesehen im Bedienfinger- und Schachtbereich,
- Fig. 29 bis 31: Zwischenschritte eines Einlagerns/links von Artikeln (in einen nicht veranschaulichten linken Regalschacht), gesehen im Tischbereich,
- Fig. 32 bis 34: Zwischenschritte eines Einlagerns/rechts von Artikeln (in einen nicht veranschaulichten rechten Regalschacht), gesehen im Tischbereich,
- Fig. 35 bis 40: Zwischenschritte eines Einlagerns/rechts, gesehen im Bedienfinger- und Schachtbereich,
- Fig. 41: eine andere Ausführungsvariante eines einseitigen Ketten- oder Zahnriementriebs für ein Aus- und Einlagern aus einem bzw. in einen linken nicht veranschaulichten Regalschacht, und
- Fig. 42: eine dritte Ausführungsvariante eines einseitigen Lineartriebes für ein Aus- und Einlagern aus einem bzw. in einen linken nicht veranschaulichten Regalschacht.

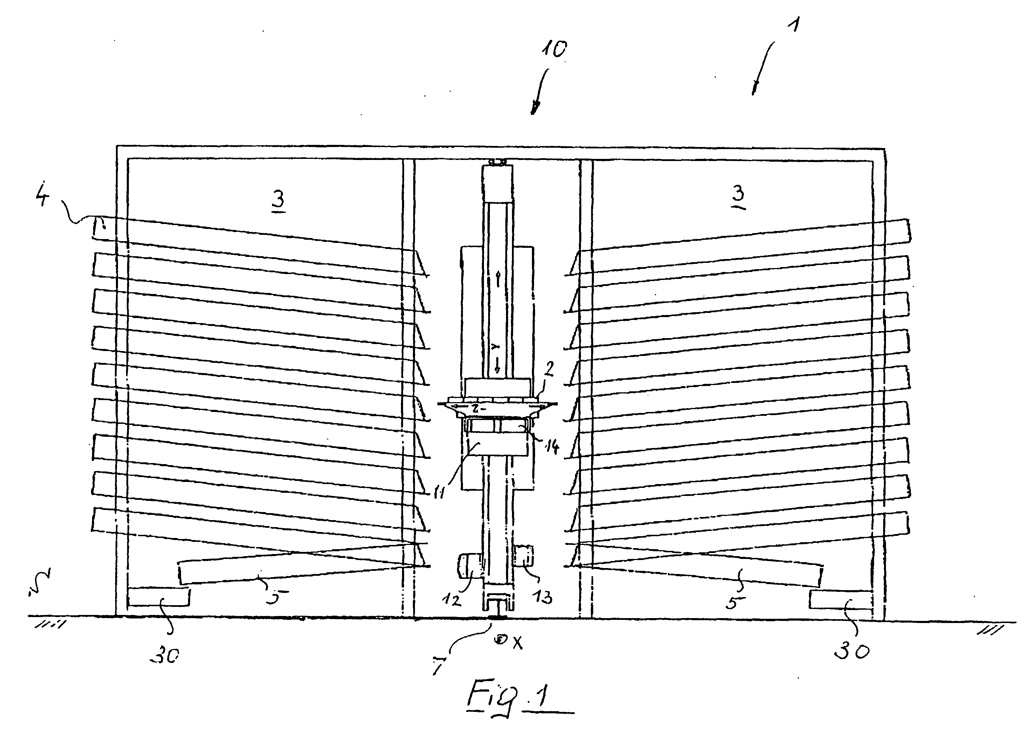

Gemäß Fig. 1 umfaßt ein Kommissionierautomat 1 zur automatischen Kommissionierung von Artikeln 2 zwei gegenüberliegende, zueinander parallele, geradlinige, voneinander beabstandete Regale 3 mit einer mittleren Regalgasse in Regallängsrichtung.

Jedes Regal 3 besitzt übereinander und nebeneinander angeordnete Schächte 4, welche sich in Regalquerrichtung Z erstrecken und in ihrer Längsrichtung gegenüber der Horizontalen geneigt sind. In den oder in einzelnen Schächten befinden sich jeweils sortengleiche Artikel, welche hintereinander gelagert sind.

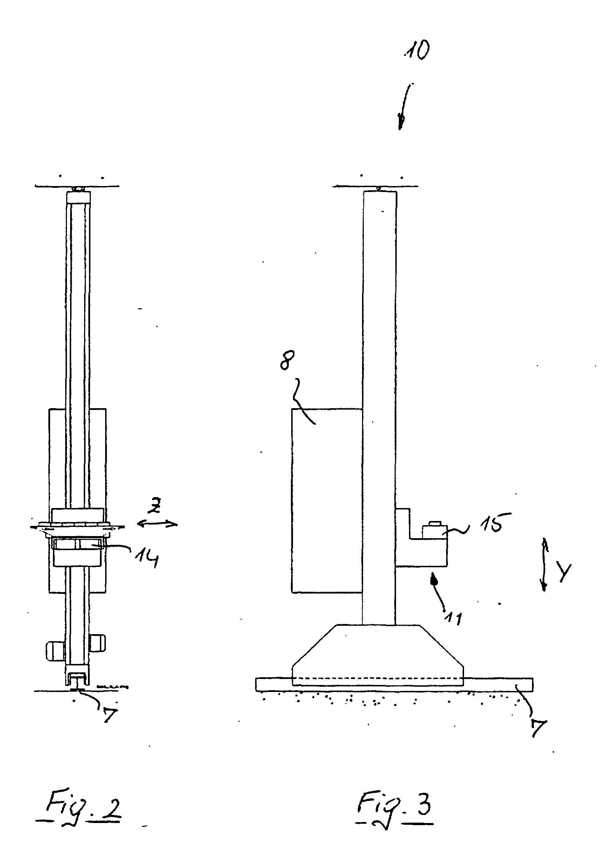

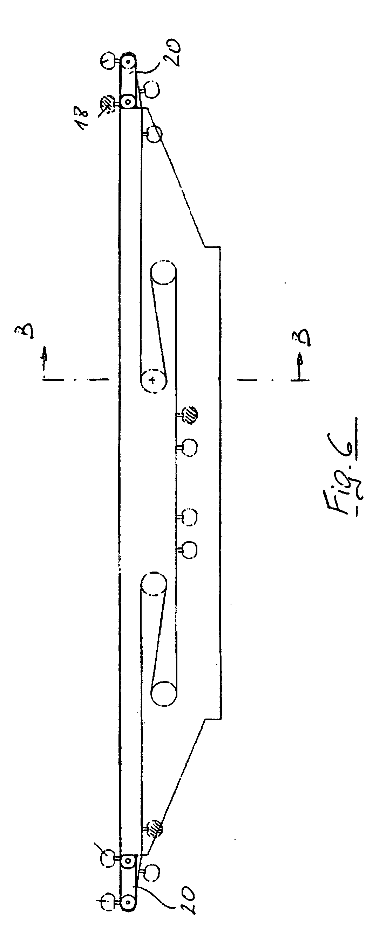

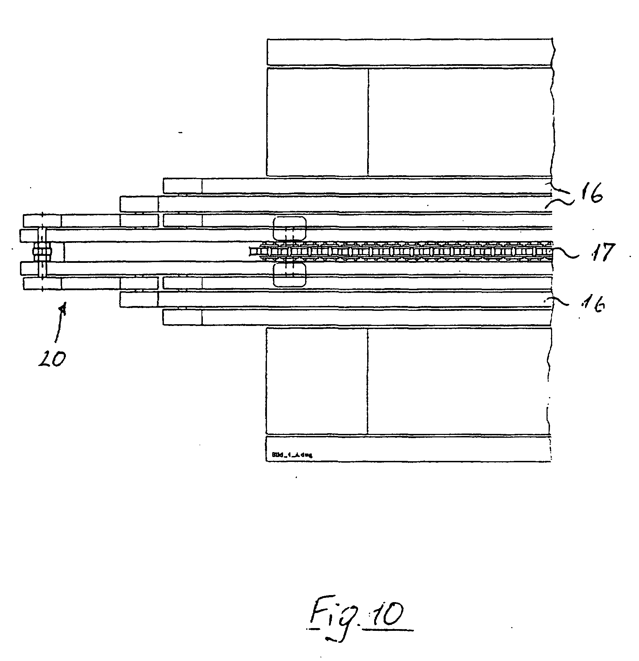

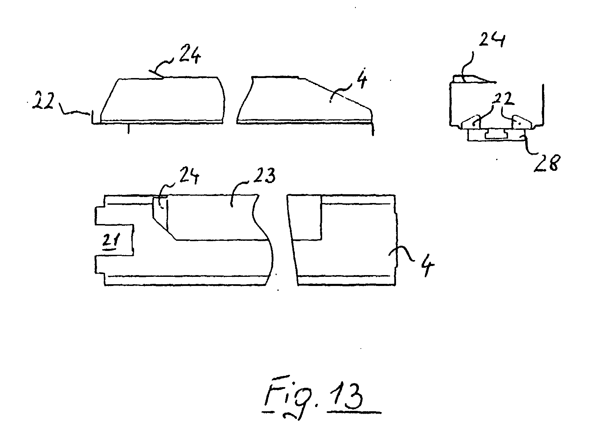

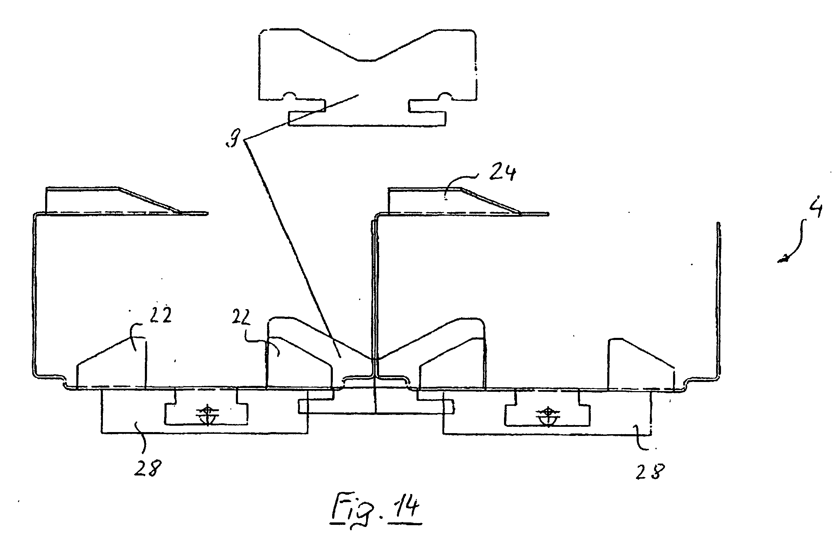

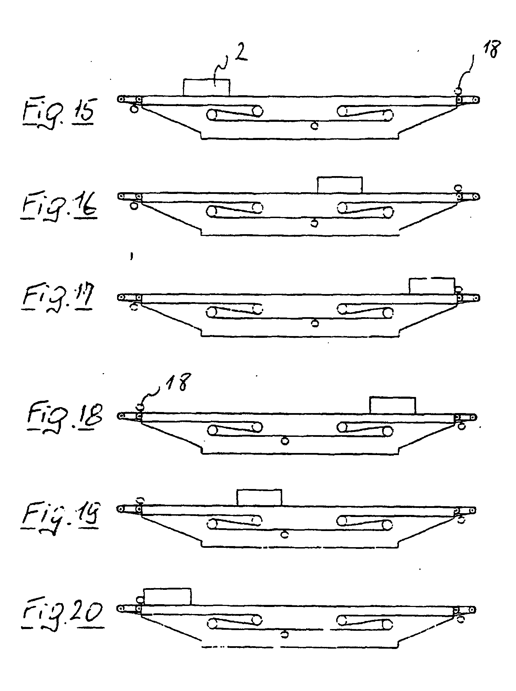

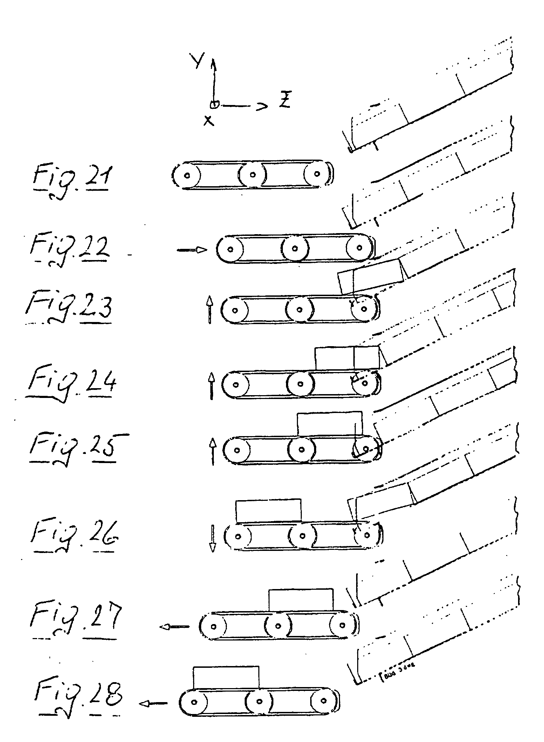

Die Neigung der Schächte 4 ist so gewählt, daß die eingelagerten Artikel aufgrund ihres Eigengewichts nach unten rutschen können. Die oben und unten endseitig offenen Schächte besitzen am schachtunteren Ende, welches einem Regalbediengerät 10 gemäß Fig. 1 bis 12 zugewandt ist, jeweils zumindest einen vom Schachtboden nach oben weisenden Haltezinken 22 gemäß Fig. 13, 14, welcher den schachtuntersten Artikel und mithin gegebenenfalls nachgeordnete Artikel des gleichen Schachts festhält bzw. am Ausrutschen aus dem Schacht 4 hindert.

Die Regale 3 besitzen längsendseitig jeweils eine Auslaßrutsche 5 für kommissionierte Artikel 2, welche entgegengesetzt zu den Schächten 4 gegenüber der Horizontalen geneigt ist.

In der Regalgasse befindet sich mittig das Regalbediengerät 10, welches in Regallängsrichtung X durch einen ersten Antrieb 12 auf Schienen 7 zumindest zwischen den beiden Regalen 3 verfahrbar ist. Der Antrieb 12, wie auch die nachfolgend noch genannten anderen Antriebe 13, 14, 16 und 17, ist bzw. sind rechnergesteuert. Das diese Antriebe steuernde elektronische Steuergerät 8 ist am Regalbediengerät 10 befestigt.

Das Regalbediengerät 10 umfaßt eine Bedienungseinheit 11, welche durch einen zweiten Antrieb 13 in Regalhochrichtung Y höhenverstellbar ist.

Die höhenverstellbare Bedienungseinheit besitzt ihrerseits einen querverlaufenden Tisch 15, welcher in Regalquerrichtung Z durch einen dritten Antrieb 14 querverstellbar ist.

Die Anordnung ist so getroffen, daß der querverlaufende Tisch 15 der Bedienungseinheit 11 bei jedem unteren Schachtende durch den ersten, den zweiten und den dritten Antrieb 12, 13 und 14 positionierbar ist. Die Ansteuerung erfolgt entsprechend der dem Steuergerät 8 eingegebenen Software.

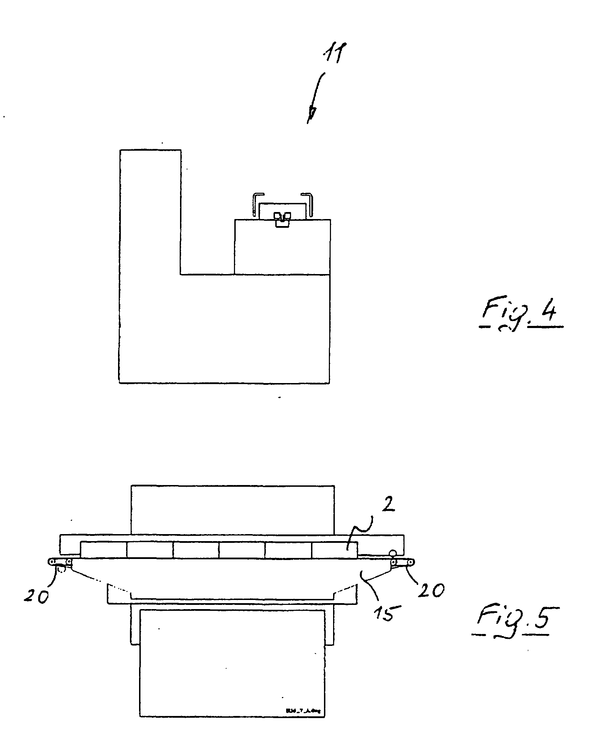

Auf dem querverlaufenden Tisch 15 können Artikel 2, insbesondere gemäß Fig. 4 bis 12, in Regalquerrichtung Z zwischengelagert werden, um diese Artikel in einen ausgewählten Schacht 4 durch das untere Schachtende einzulagern bzw. einzuschieben, wie nachfolgend noch beschrieben wird.

Die Anordnung ist ferner so getroffen, daß auch Artikel aus dem Schacht auf den Tisch über das untere Schachtende ausgelagert und dort zwischengelagert werden können.

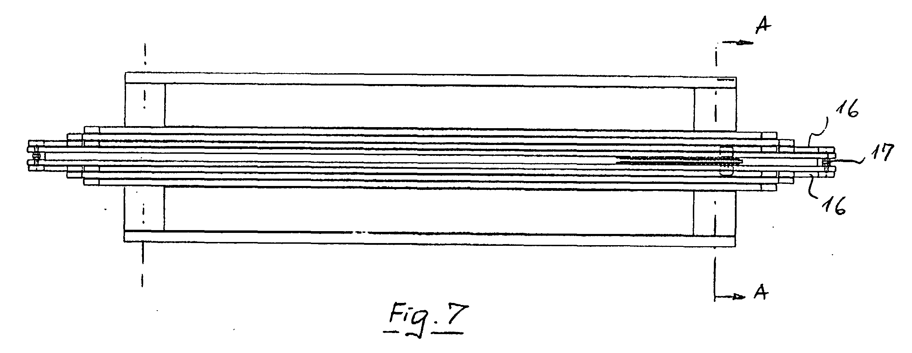

Im Tisch 15 sind ein in Regalquerrichtung Z verlaufender, rollengeführter, rechnergesteuerter, erster Endlos-Antrieb 16 und ein in Regalquerrichtung Z verlaufender, rollengeführter, rechnergesteuerter, zweiter Endlos-Antrieb 17 zur Horizontalförderung von Artikeln 2 auf dem Tisch 15 ausgebildet. Der obere Trum eines jeden Endlos-Antriebs 16 und 17 ist hierbei in der Tischoberseite gemäß Fig. 7 bis 10 integriert. Im Tisch 15 befinden sich die Antriebsrollen und - zahnräder sowie leerlaufende Umlenkrollen der Endlos-Antriebe 16, 17.

Der erste Endlos-Antrieb 16, welcher aus mehreren parallelen synchron angetriebenen Rund-Riementrieben besteht, ist hierbei zum Auslagern von Artikeln aus einem ausgewählten Schacht 4 vorgesehen, während der zweite Endlos-Antrieb 17, welcher ein Kettenantrieb ist, zum Einlagern von Artikeln in einem ausgewählten Schacht 4 bestimmt ist.

Der zweite Endlos-Antrieb 17 ist mittig gemäß Fig. 7 und 10 im querverlaufenden Tisch 15 angeordnet, während der erste Endlos-Antrieb 16 beidseits des zweiten Endlos-Antriebes 17 symmetrisch zu diesem Antrieb 17 verläuft.

Der zweite Endlos-Antrieb 17 in Form eines Kettentriebs umfaßt gemäß Fig. 6 drei auf dem Endlos-Umfang gleich verteilte hervorstehende Artikelanschläge 18, welche, in Fig. 6 schraffiert dargestellt, senkrecht an entsprechenden Kettenlaschen 19 gemäß Fig. 12 des Kettentriebs befestigt sind. Die Artikelanschläge 18 erfüllen eine Doppelfunktion, wie nachfolgend noch beschrieben wird.

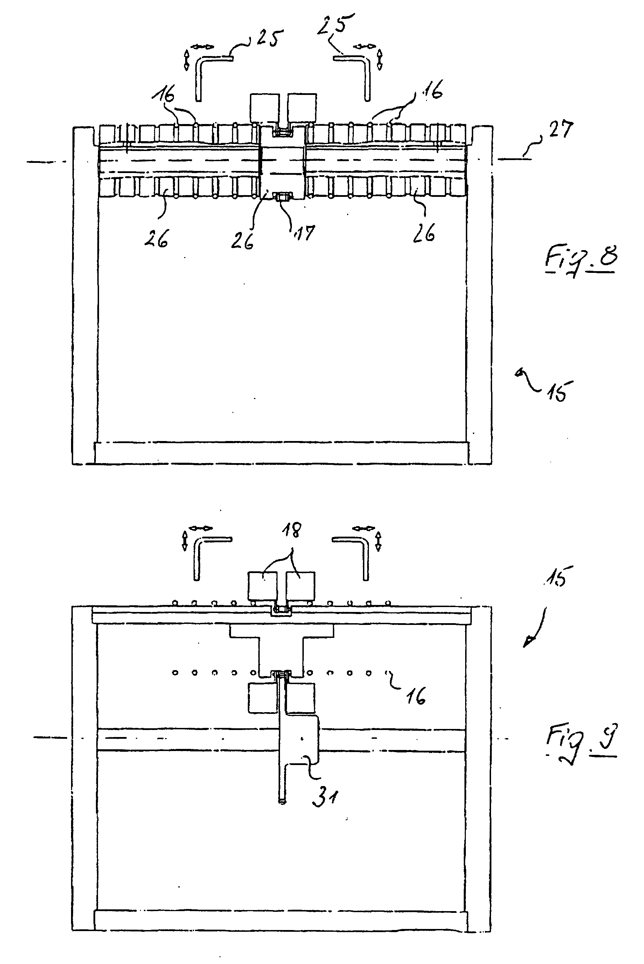

Die Artikelanschläge 18 sind mittig gemäß Fig. 8, 9 und 11 unterteilt, wobei beide Anschlaghälften seitlich vom Kettentrieb liegen, so daß im Tischinneren der Rücklauftrum der Kette über Antriebszahnräder laufen kann.

Gemäß Fig. 6, 7 sind der erste und der zweite Endlos-Antrieb 16, 17 als Umkehrtriebe ausgebildet, welche in beiden Regalquerrichtungen Z unabhängig voneinander betrieben werden können.

Der querverlaufende Tisch 15 weist gemäß Fig. 6, 7, 10 an seinen beiden Querenden mittig jeweils einen in Draufsicht schmalen Bedienfinger 20 auf, in welchem auch der erste und der zweite Endlos-Antrieb 16, 17 integriert ausgebildet ist.

Der Bedienfinger 20 kann bei einer Auslagerung eines ausgewählten schachtuntersten Artikels 2 auf den Tisch 15 oder bei einer Einlagerung eines Artikels vom Tisch 15 in einen ausgewählten Schacht 4 mit der Bodenseite dieses Artikels in Eingriff gebracht werden, wie dies insbesondere in Fig. 23 bis 26 und 37 bis 39 gezeigt ist.

Der Boden eines jeden Schachts 4 des Regals 3 umfaßt an der schachtunteren, dem Regalbediengerät 10 zugewandten Seite eine zentrale Aussparung 21 gemäß Fig. 13, welche geringfügig größer als der Bedienfinger 20 in Draufsicht ist, wobei bei einem bei einem unteren Schachtende positionierten Regalbediengerät der Bedienfinger 20 berührungsfrei in der Aussparung aufnehmbar ist, d.h. berührungsfrei nach oben oder nach unten bei Betätigung des zweiten Antriebs 13 hindurchbewegt werden kann.

Der hochstehende Haltezinken 22 kann höhen- und/oder seitenverstellbar ausgebildet sein.

Auch kann der hochstehende Haltezinken 22 in Form und Größe auch durch Zusatzformbleche bzw. Haltezinken-Aufsteckbleche 9, beispielsweise gemäß Fig. 14, verändert werden.

Jede Schachtdeckwand 23 ist bezüglich des Haltezinkens 22 regalseitig gemäß Fig. 14 zurückversetzt ist und weist einen nach oben abgewinkelten Rand 24 auf, welcher den Durchlauf eines Artikels am unteren Schachtende bei einem Einlagern oder einem Auslagern erleichtert.

Der querverlaufende Tisch 15 weist tischoberseitig einen höhenverstellbaren Artikelniederhalter und eine verstellbare Artikel-Seitenführung auf jeder Seite des zweiten Endlos-Antriebs 17 in Form von zwei abgewinkelten Leitschienen 25 auf, wobei beide Leitschienen 25 bezüglich der Querachse des Tisches 15 synchron bzw. gleichzeitig seiten- und höhenverstellbar sind. Die Leitschienen 25 besorgen insbesondere bei einem Einlagern von Artikeln im Schacht vorab ein Zentrieren des Artikelanschlags 18 sowie.ein Ausrichten der auf dem Tisch 15 gelagerten Artikel 2 vor einem Einschieben in das Regal an ausgewählter Stelle.

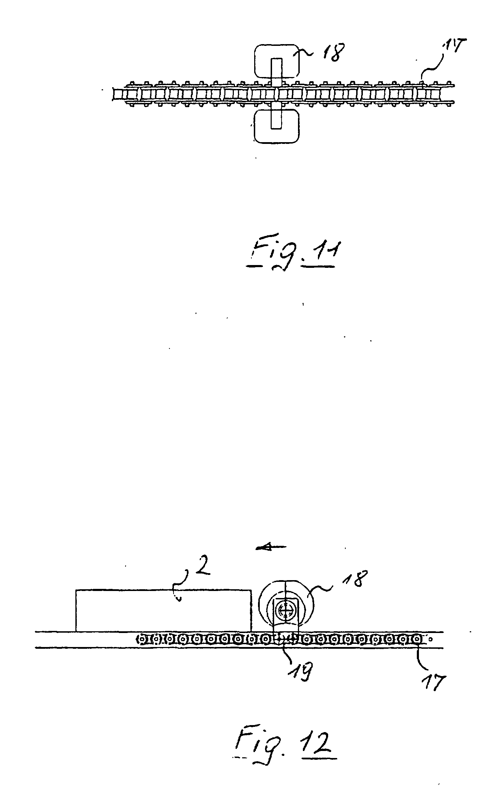

Der Artikelanschlag 18 weist, gesehen in Regallängsrichtung Z, eine abgerundete Form auf, wie dies insbesondere den Fig. 11 und 12 zu entnehmen ist.

Rollen 26 des ersten und des zweiten Endlos-Antriebes 16, 17 können auf einer gemeinsamen Achse 27 gemäß Fig. 8 gelagert sein.

Jeder Schacht 4 weist gemäß Fig. 13, 14 am unteren Ende ein Positionierblech 28 zum Auffinden des Regalortes mit Hilfe einer systemeigenen Sensorik auf, welche an das Steuergerät 8 angeschlossen ist.

Die vorstehende Gesamtanordnung ist nun so getroffen, daß bei einem automatischen Auslagern von Artikeln gemäß Fig. 15 bis 28 aus den Regalen 3 mit in schrägen Schächten des Regals hintereinander angrenzend gelagerten Artikeln, wobei jeweils der schachtunterste Artikel gegen ein Herausrutschen aus dem Schacht 4 durch den feststehenden Haltezinken 22 am unteren Schachtende gesichert wird, das Regalbediengerät 10 durch den ersten, den zweiten und den dritten rechnergesteuerten Antrieb 12, 13, 14 zum unteren Ende des ausgewählten Schachts 4 bewegt und der Bedienfinger 20 dicht unterhalb des Schachtendes unter der Aussparung 21 positioniert wird, daß bei eingeschaltetem kontinierlich laufenden ersten Endlos-Antrieb 16 die Bedienungseinheit 11 nebst Tisch 15 einschließlich Bedienfinger 20 durch den zweiten Antrieb 13 so weit angehoben wird, daß der Bedienfinger 20 berührungsfrei durch die Aussparung 21 gelangt und dabei den schachtuntersten Artikel bodenseitig untergreift und dergestalt anhebt, daß (nebst eventuell weiterer Artikel im Schacht) der zweitunterste Artikel im Schacht 4 bis zum Haltezinken 22 nachrutscht und der zuvor schachtunterste Artikel durch den ersten Endlos-Antrieb 16 in Querrichtung weg vom Regal 3 auf dem Tisch 15 bis zu einem auf der anderen Tischseite durch Stellbetrieb des zweiten Endlos-Antriebes 17 positionierten Artikelanschlag 18 (z. B. gemäß Fig. 6, tischoberseitig rechts, schraffiert) gefördert wird, worauf die Bedienungseinheit 11 gegebenenfalls durch den dritten Antrieb 14 in eine regalferne Neutralposition bewegt wird.

Bei einer Bedienung eines gegenüberliegenden Regals 3 wird der erste Endlos-Antrieb 16 in der Drehrichtung umgeschaltet und der Artikelanschlag 18 des zweite Endlos-Antriebs 17 auf der anderen Tischquerseite gemäß Fig. 18 bis 20 (vgl. demgegenüber Fig. 15 bis 17) positioniert. Hierbei braucht der zweite Endlos-Antrieb in der Drehrichtung nicht umgeschaltet zu werden. Es genügt ein kurzer Verstellbetrieb, um einen (anderen) Artikelanschlag auf der anderen Tischoberseite zu positionieren.

Ist der Auslagerungsvorgang abgeschlossen, wird das Regalbediengerät 10 zu der auf der Längsseite des Regals 3 gelegenen Übergabestelle 3 gemäß Fig. 1 über eine vorgelagerte Auslaßrutsche 5 bewegt, welche bezüglich der Horizontalen in der Gegenrichtung der Schächte geneigt ist.

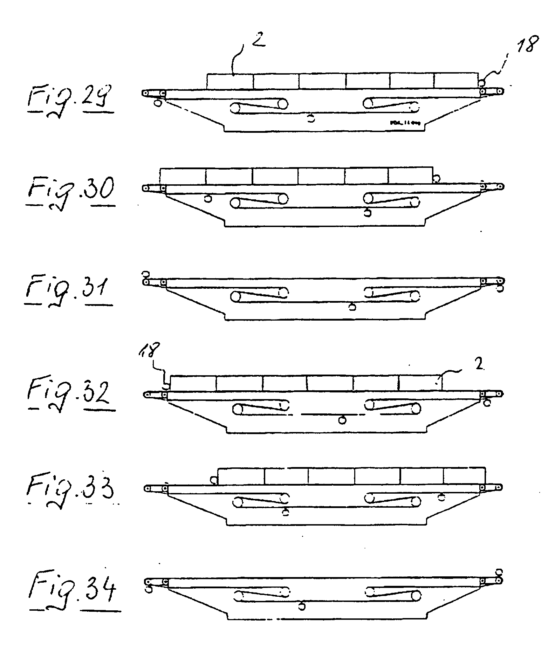

Bei einem automatischen Einlagern von Artikeln gemäß Fig. 29 bis 40 mit Hilfe eines Kommissionierautomaten 1 der vorstehend beschriebenen Art wird der Artikelanschlag 18 des zweiten Endlos-Antriebes 17 auf der regalfernen Tischoberseite positioniert und durch einen geschlossenen Zentrierer zentriert. Die einzulagernden hintereinander auf der Tischoberseite angeordneten Artikel 2 werden durch Verstellen der Artikel-Seitenführung im wesentlichen mittig ausgerichtet und durch den Artikel-Niederhalter in der Höhe geführt. Anschließend werden die Artikel durch den Artikelanschlag 18 durch Betrieb des zweiten Endlos-Antriebs 17 in entsprechender Drehrichtung in eine regalnahe Einlagerungsposition auf dem Tisch 15 vorgeschoben, wobei der Bedienfinger 20 artikelfrei gehalten wird. Anschließend wird der Bedienfinger 20 unterhalb der Aussparung 21 des ausgewählten Schachts 4 durch Betätigung des ersten, zweiten und dritten Antriebes 12, 13, 14 positioniert. Durch den zweiten Antrieb 13 wird dann der Bedienfinger 20 nebst Tisch so weit angehoben wird, daß der Bedienfinger berührungsfrei durch die Aussparung 21 gelangt und dabei den schachtuntersten Artikel bodenseitig untergreift und dergestalt anhebt, daß (nebst eventuell weiterer Artikel im Schacht) der zweitunterste Artikel im Schacht 4 bis zu den vorpositionierten einzulagernden Artikeln auf dem Tisch 15 nachrutscht und die Artikel aufgrund des Eigengewichts der Artikelreihe gegen den Artikelanschlag 18 schiebt. Dann wird der zweite Endlos-Antrieb 17 in einen Stellbetrieb genommen, wobei der Artikelanschlag 18 in Richtung Regal 3 bis unmittelbar zum Bedienfingerende gemäß Fig. 31, 34 tischoberseitig bewegt wird. Dabei schiebt der Artikelanschlag 18 die einzulagernden Artikel 2 in den ausgewählten Schacht. Anschließend wird der Bedienfinger nebst Tisch durch den zweiten Antrieb 13 berührungsfrei durch die Aussparung 21 nach unten verstellt, wodurch die Artikel 2 in Schacht 4 gegen den Haltezinken 22 rutschen.

Gegebenenfalls wird der gleiche Schacht nochmals oder ein anderer ausgewählter Schacht entsprechend angefahren und bedient, bis der Einlagerungsauftrag abgeschlossen ist.

Wie. beim Auslagern, wird auch beim Einlagern von Artikeln bei einer Bedienung eines gegenüberliegenden Regals 3 der Tisch 15 seitenverkehrt betrieben. Insbesondere wird ein Artikelanschlag 18 des zweite Endlos-Antriebs 17 vor einem Einschieben der Artikel in den Schacht auf der anderen Tischquerseite positioniert, wie dies im Zusammenhang mit dem Auslagern beschrieben worden ist.

Durch das Regalbediengerät 10 können nicht nur ausgewählte Artikel aus Schächten 4 ausgelagert, sondern auch an anderer Regalstelle eingelagert, d.h. ausgewählte Artikel im Regal 3 umgelagert werden.

Mit Bezug auf die Fig. 21 bis 28 geht ein Auslagern von Artikeln wie folgt vonstatten:
Fig. 21: Achsbewegung +X; Das Regalbediengerät verfährt in X-Richtung zur Sollposition.
   Achsbewegung +Y; Die Y-Achse wird bis zur Sollposition in der Höhe verfahren. Die Sollposition liegt unterhalb des Schachts, aus dem ein Artikel entnommen werden soll (Y-Achse) und genau in der Mitte des Schachtes (X-Achse).
Fig. 22: Achsbewegung +Z; Wenn die Sollposition erreicht ist, wird die Z-Achse (Entnahmeeinheit bzw. Tisch) in Richtung der Schächte bis zur Endlage verfahren. Die Förderbänder werden eingeschaltet. Der Entnahmefinger bzw. der Bedienfinger wird in die Aussparung zwischen den Haltezinken des Schachts gefahren. Das Förderband des Tischs wird eingeschaltet.
Fig. 23: Achsbewegung +Y; Wenn die Endlage erreicht ist, wird die Bedienungseinheit bzw. der Tisch so weit angehoben, daß das Förderband über die Haltezinken herausragt. Beim Anheben der Bedienungseinheit wird der Artikel über den Haltezinken gehoben und gefördert.
Fig. 24: Achsbewegung +Y; Die Bedienungseinheit wird weiter nach oben verfahren, so daß sich der nachfolgende Artikel am Stopper des Bedienfingers verfängt.
Fig. 25: Der Stopper verhindert das Nachlaufen der Artikel auf das Förderband. Ein Vereinzeln der Artikel beim Auslagern wird hierdurch möglich. Ein Anschlag verhindert das Herabfallen der Artikel vom Förderbandende. Bei der Kettenschieber-Version kann der Schieber als Anschlag fungieren.
Fig. 26: Achsbewegung -Y; Bei einer erneuten Auslagerung aus dem gleichen Schacht wird die Entnahmeeinheit wieder abgesenkt. Der Artikel, welcher sich am Stopper verfangen hat, kann jetzt mit Hilfe der Förderbänder ausgelagert werden. Für das Vereinzeln wird die Entnahmeeinheit nach oben gefahren. Durch Wiederholung der Schritte gemäß Fig. 25 und 26 kann kontinuierlich aus demselben Schacht ausgelagert werden.
Fig. 27: Achsbewegung -Y; Die Entnahmeeinheit wird schnell in die Ausgangslage gemäß Fig. 22 abgesenkt. Die nachfolgenden Artikel verfangen sich am Haltezinken. Bei einer erneuten Auslagerung aus diesem Schacht werden die Schritte gemäß Fig. 22 bis 25 bzw. 26 so oft wiederholt, bis die gewünschte Anzahl an Artikeln ausgelagert ist.
Fig. 28: Achsbewegung -Z; Die Auslagerung ist abgeschlossen. Die Entnahmeeinheit wird in die Fahrposition zurückgefahren. Das Regalbediengerät ist bereit, den nächsten Schacht anzufahren.

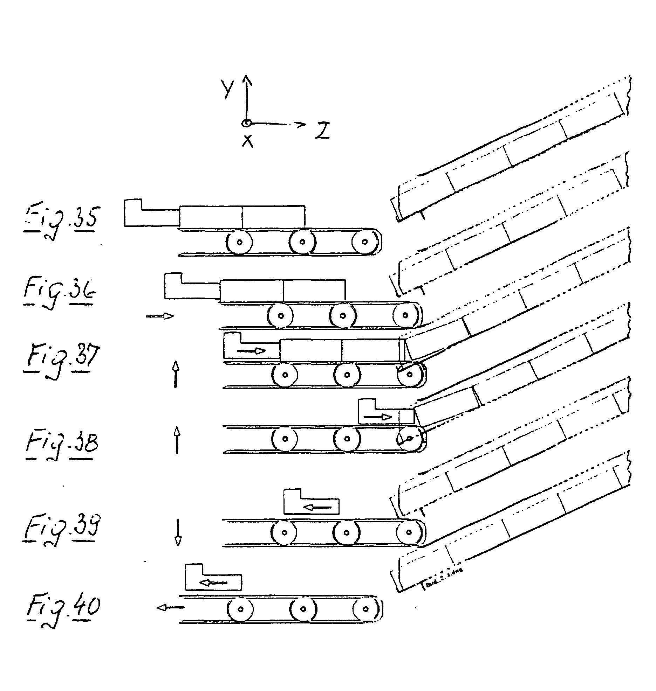

Mit Bezug auf die Fig. 35 bis 40 geht ein Einlagern von Artikeln wie folgt vonstatten:
Fig. 35: Achsbewegung +X Das Regalbediengerät verfährt in Richtung X zur Sollposition.
   Achsbewegung +Y; Die Y-Achse wird bis zur Sollposition in der Höhe verfahren. Die Sollposition liegt unterhalb des Schachts, in der ein Artikel eingelagert werden soll (Y-Achse) und genau in der Mitte des Schachts (X-Achse).
Fig. 36: Achsbewegung +Z; Wenn die Sollposition erreicht ist, wird die Z-Achse (Entnahmeeinheit) in Richtung der Schächte bis zur Endlage verfahren. Der Entnahmefinger wird in die Aussparung zwischen den Haltezinken des Schachts gefahren.
Fig. 37: Achsbewegung +Y; Wenn die Endlage erreicht ist, wird die Entnahmeeinheit so weit angehoben, bis das Förderband über die Haltezinken herausragt. Die auf der Entnahmeeinheit liegenden Artikel werden durch den Schieber so weit vorgeschoben, daß sie genau auf dem Entnahmefinger stehen. Die Entnahmeeinheit wird angehoben.
Fig. 38: Achsbewegung +Y; Die Entnahmeeinheit wird weiter nach oben verfahren, so daß die Artikel vom Haltezinken freikommen. Wenn die Einlagerungshöhe erreicht ist, werden die Artikel durch den Schieber in den Schacht geschoben. Das Förderband läuft zur Unterstützung mit. Nach dem Einschieben bleibt der Schieber in der Endlage stehen und verhindert somit das Herausgleiten der Artikel aus dem Schacht.
Fig. 39: Achsbewegung -Y; Die Entnahmeeinheit wird schnell in die Ausgangslage gemäß Fig. 36 abgesenkt. Die nachfolgenden Artikel werden durch den Haltezinken zurückgehalten. Der Schieber wird zurückgefahren.
Fig. 40: Achsbewegung -Z; Die Einlagerung ist abgeschlossen. Die Entnahmeeinheit wird in Fahrposition zurückgefahren. Das Regalbediengerät ist bereit, den nächsten Schacht anzufahren.

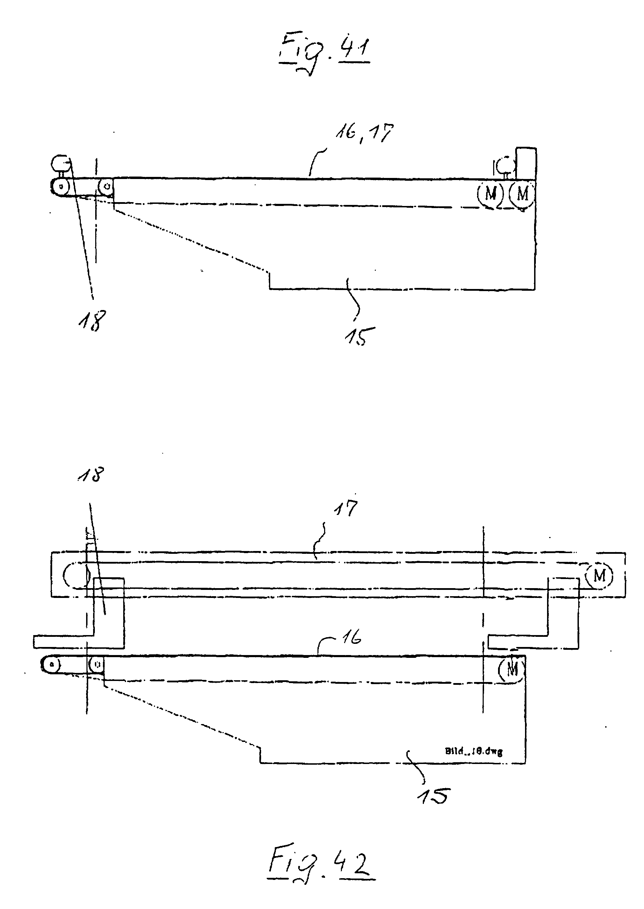

Die schließlich in den Fig. 41 und 42 veranschaulichten Ausführungsvarianten einer Entnahmeeinheit bzw. eines querverlaufenden Tisches 15 sind für eine einseitige Artikeleinlagerung und -auslagerung bei einem nicht veranschaulichten linken Regal konzipiert und im Vergleich zu der vorgenannten Ausführungsvariante nicht symmetrisch, sondern asymmetrisch ausgebildet. Beide Varianten arbeiten mit einem einzigen Schieber für ein Einlagern der Artikel.

Gemäß Fig. 41 sind die beiden Motoren M für den Schieber und den Riemen hintereinander im Bereich der Tischoberseite an einem Querende (rechts) vorgesehen. Im besonderen zeigt Fig. 41 eine Kette oder Zahnriemenlösung.

Fig. 42 veranschaulicht eine Lineareinheitslösung, bei der der Schieber bezüglich des Tisch-Förderbandes hochgelagert ist, entsprechend hoch gelagert auch der Schiebermotor. Bei letztgenannter Variante kann der Entnahme- bzw. Bedienfinger 20 sehr schmal ausgebildet werden.

Für jede Regalseite kann eine einseitige vorgenannte Entnahmeeinheit verwendet werden, oder bei einer einzigen Entnahmeeinheit diese Entnahmeeinheit um das Regal gefahren werden, um beide Regalseiten zu bedienen.

## Patentansprüche

1. Kommissionierautomat (1) zur automatischen Kommissionierung von Artikeln (2), mit zumindest einem Regal (3) mit übereinander und nebeneinander angeordneten Schächten (4) oder Fachböden, welche sich in Regalquerrichtung erstrecken und in ihrer Längsrichtung gegenüber der Horizontalen geneigt sind und in denen jeweils sortengleiche Artikel hintereinander gelagert werden können, wobei bei einer Entnahme bzw. Auslagerung eines schachtuntersten Artikels die Artikel im Schacht (4) bzw. auf dem Fachboden nachrutschen können, und mit einem dem Regal (3) zugeordneten separaten Regalbediengerät (10), welches eine bei jedem Schachtende positionierbare, rechnergesteuerte Bedienungseinheit (11) sowohl für ein Auslagern als auch für ein Einlagern von Artikeln (2) aufweist, und die Bedienungseinheit (11) des Regalbediengeräts durch einen rechnergesteuerten ersten Antrieb (12) in Längsrichtung des Regals (3) verfahrbar und durch einen rechnergesteuerten zweiten Antrieb (13) höhenverstellbar ist und einen zur Längsrichtung des Regals (3) querverlaufenden Tisch (15) umfaßt, auf welchem ein- oder ausgelagerte Artikel (2) in Regalquerrichtung zwischengelagert werden können, wobei der Tisch (15) in Regalquerrichtung durch einen rechnergesteuerten dritten Antrieb (14) querverstellbar ist und im Tisch (15) ein in Regalquerrichtung verlaufender, rollengeführter, rechnergesteuerter, erster Endlos-Antrieb (16) und ein in Regalquerrichtung verlaufender, rechnergesteuerter weiterer Antrieb zur Horizontalförderung von Artikeln (2) auf dem Tisch (15) ausgebildet sind, und wobei der erste Endlos-Antrieb (16) zum Auslagern von Artikeln aus einem ausgewählten Schacht (4) und der weitere Antrieb zum Einlagern von Artikeln in einem ausgewählten Schacht (4) vorgesehen sind,
**dadurch gekennzeichnet,**
**daß** der weitere Antrieb als rollengeführter, zweiter Endlos-Antrieb (17) ausgebildet und mittig im querverlaufenden Tisch (15) angeordnet ist, während der erste Endlos-Antrieb (16) beidseits des zweiten Endlos-Antriebes (17) symmetrisch zum zweiten Endlos-Antrieb (17) angeordnet ist.

2. Kommissionierautomat nach Anspruch 1,
**dadurch gekennzeichnet,**
**daß** der zweite Endlos-Antrieb (17) zumindest einen hervorstehende Artikelanschlag (18), vorzugsweise drei auf dem Endlos-Umfang des zweiten Endlos-Antriebs (17) gleich verteilte Artikelanschläge (18), aufweist, und insbesondere der zweite Endlos-Antrieb (17) ein Kettentrieb ist, wobei der Artikelanschlag (18) senkrecht an einer Kettenlasche (19) des Kettentriebs befestigt ist, der Artikelanschlag (18) mittig unterteilt ist, d.h. die beiden Anschlaghälften seitlich vom Kettentrieb gelegen sind, und insbesondere der erste Endlos-Antrieb (16) ein oder mehrere synchrone Flach-Riementriebe oder synchrone Rund-Riementriebe sind.

3. Kommissionierautomat nach Anspruch 1 oder 2,
**dadurch gekennzeichnet,**
**daß** zwei gegenüberliegende geradlinige voneinander beabstandete Regalreihen vorgesehen sind, wobei das Regalbediengerät (10) in der dazwischenliegenden Regalgasse längsmittig angeordnet und in Längsrichtung des Regals (3) verfahrbar oder verschieblich ist, und daß der erste und der zweite Endlos-Antrieb (16, 17) Umkehrtriebe sind, welche in beiden Regalquerrichtungen unabhängig voneinander betrieben werden können.

4. Kommissionierautomat nach einem der Ansprüche 1 bis 3,
**dadurch gekennzeichnet,**
**daß** der querverlaufende Tisch (15) zumindest an seinem einen Ende mittig einen Bedienfinger (20) aufweist, in welchem auch der erste und der zweite Endlos-Antrieb (16, 17). integriert ausgebildet ist, wobei der Bedienfinger (20) bei einer Auslagerung eines ausgewählten schachtuntersten Artikels (2) oder bei einer Einlagerung eines Artikels vom Tisch (15) in einen ausgewählten Schacht (4) mit der Bodenseite dieses Artikels in Eingriff bringbar ist, und daß der Boden eines Schachts (4) bzw. jeder Flachboden des Regals (3) an der schachtunteren, dem Regalbediengerät zugewandten Seite eine zentrale Aussparung (21) besitzt, welche geringfügig größer ist als der Bedienfinger (20) in Draufsicht, wobei bei einem bei einem unteren Schachtende positionierten Regalbediengerät der Bedienfinger (20) berührungsfrei in der Aussparung aufnehmbar ist, d.h. berührungsfrei nach oben oder nach unten hindurchbewegt werden kann.

5. Kommissionierautomat nach einem der Ansprüche 1 bis 4,
**dadurch gekennzeichnet,**
**daß** das untere Ende des Schachtbodens zumindest einen hochstehenden Haltezinken (22) aufweist, welcher vorzugsweise höhen- und/oder seitenverstellbar ist, und insbesondere die Schachtdeckwand (23) bezüglich des Haltezinkens (22) regalseitig zurückversetzt ist und einen nach oben abgewinkelten Rand (24) aufweist oder im Deckenbereich eines Flachbodens ein bezüglich des hochstehenden Haltezinkens regalseitig zurückversetzter nach oben abgewinkelter Niederhalter vorgesehen ist.

6. Kommissionierautomat nach einem der Ansprüche 1 bis 5,
**dadurch gekennzeichnet,**
**daß** der Tisch (15) einen Artikelanschlag-Zentrierer und/oder eine verstellbare Artikel-Seitenführung und/oder einen höhenverstellbaren Artikel-Niederhalter aufweist, wobei insbesondere der höhenverstellbare Artikelniederhalter und die verstellbare Artikel-Seitenführung auf jeder Seite des zweiten Endlos-Antriebs (17) eine abgewinkelte Leitschiene (25) ist, und beide Leitschienen (25) bezüglich der Querachse des Tisches (15) synchron bzw. gleichzeitig verstellbar sind.

7. Verfahren zum automatischen Auslagern von Artikeln mit Hilfe eines Kommissionierautomaten nach einem der Ansprüche 1 bis 6, wobei in schrägen Schächten des Regals Artikel hintereinander angrenzend gelagert worden sind und jeweils der schachtunterste Artikel gegen ein Herausrutschen aus dem Schacht durch den feststehenden Haltezinken am unteren Schachtende gesichert wird,
**dadurch gekennzeichnet,**
**daß** das Regalbediengerät (10) durch einen ersten, zweiten und dritten rechnergesteuerten Antrieb (12, 13 14) zum unteren Ende des ausgewählten Schachts (4) bewegt und der Bedienfinger (20) unterhalb des Schachtendes unter der Aussparung (21) positioniert wird, daß bei eingeschaltetem kontinuierlich laufenden ersten Endlos-Antrieb (16) die Bedieneinheit (11) nebst Tisch (15) einschließlich Bedienfinger (20) durch den zweiten Antrieb (13) so weit angehoben und abgesenkt wird, daß der Bedienfinger (20) berührungsfrei durch die Aussparung (21) gelangt und dabei den schachtuntersten Artikel bodenseitig untergreift und dergestalt anhebt und absenkt, daß, nebst eventuell weiterer Artikel im Schacht, der zweitunterste Artikel im Schacht (4) bis zum Haltezinken (22) nachrutscht und der zuvor schachtunterste Artikel durch den ersten Endlos-Antrieb (16) in Querrichtung weg vom Regal (3) auf dem Tisch (15) bis zu einem auf der anderen Tischseite durch Stellbetrieb des zweiten Endlos-Antriebes (17) positionierten, in Förderrichtung mittig zwischen den beiden ersten Endlos-Antriebsteilen angeordneten Artikelanschlag (18) gefördert wird, worauf die Bedieneinheit (11) zumindest durch den dritten Antrieb (14) in eine regalferne Neutralposition bewegt wird.

8. Verfahren nach Anspruch 7,
**dadurch gekennzeichnet,**
**daß** der gleiche Schacht nochmals oder ein anderer ausgewählter Schacht entsprechend angefahren und bedient wird, bis der Auslagerungs- bzw. Kommissionierauftrag abgeschlossen ist oder der Tisch vollständig mit ausgelagerten Artikeln bestückt ist.

9. Verfahren nach Anspruch 7 oder 8,
**dadurch gekennzeichnet,**
**daß** das Regalbediengerät (10) zu einer auf der Längsseite des Regals (3) oder zwischen zwei Regalen (3) gelegenen Übergabestelle (30) bewegt wird, an welcher durch Betätigung des ersten oder des zweiten Endlos-Antriebes (16, 17) die auf dem Tisch (15) zwischengelagerten Artikel einem Auffangbehälter und/oder einem Förderband bzw. einer Auslaßrutsche (5) abgeben werden.

10. Verfahren nach einem der Ansprüche 7 bis 9, mit Hilfe eines Kommissionierautomaten zwischen zumindest zwei gegenüberliegenden voneinander beabstandeten Regalen,
**dadurch gekennzeichnet,**
**daß** bei einer Bedienung eines gegenüberliegenden Regals (3) zumindest der erste Endlos-Antrieb (16) umgeschaltet und der Artikelanschlag (18) des zweite Endlos-Antriebs (17) auf der anderen Tischquerseite positioniert wird.

11. Verfahren zum automatischen Einlagern von Artikeln mit Hilfe eines Kommissionierautomaten nach einem der Ansprüche 1 bis 6,
**dadurch gekennzeichnet,**
**daß** der Artikelanschlag (18) des zweiten Endlos-Antriebes (17) auf der regalfernen Tischoberseite in Förderrichtung mittig zwischen den Antriebsteilen des ersten Endlos-Antriebs positioniert und gegebenenfalls durch einen geschlossenen Zentrierer zentriert wird,
**daß** die einzulagernden hintereinander auf der Tischoberseite angeordneten Artikel durch Verstellen der Artikel-Seitenführung mittig ausgerichtet und durch den Artikel-Niederhalter in der Höhe geführt werden,
**daß** die Artikel durch den Artikelanschlag (18) in eine regalnahe Einlagerungsposition auf dem Tisch (15) vorgeschoben werden, wobei der Bedienfinger (20) artikelfrei gehalten wird,
**daß** der Bedienfinger (20) unterhalb der Aussparung (21) des ausgewählten Schachts (4) durch Betätigung des ersten, zweiten und dritten Antriebes (12, 13, 14) positioniert wird,
**daß** durch den zweiten Antrieb (13) der Bedienfinger (20) nebst Tisch so weit angehoben wird, daß der Bedienfinger berührungsfrei durch die Aussparung (21) gelangt und dabei den schachtuntersten Artikel bodenseitig untergreift und dergestalt anhebt, daß, nebst eventuell weiterer Artikel im Schacht, der zweitunterste Artikel im Schacht (4) bis zu den vorpositionierten einzulagernden Artikeln auf dem Tisch (15) nachrutscht und diese Artikel gegen den Artikelanschlag (18) schiebt,
**daß** der zweite Endlos-Antrieb (17) in einen Stellbetrieb genommen wird und den Artikelanschlag (18) in Richtung Regal (3) bis unmittelbar zum Bedienfingerende tischoberseitig bewegt und dabei die einzulagernden Artikel in den ausgewählten Schacht schiebt,
**daß** der Bedienfinger nebst Tisch durch den zweiten Antrieb (13) nach unten verstellt wird, berührungsfrei durch die Aussparung (21) gelangt und die Artikel (2) im Schacht (4) gegen den Haltezinken (22) rutschen, worauf die Bedieneinheit (11) zumindest durch den dritten Antrieb (14) in eine regalferne Neutralposition bewegt wird.

12. Verfahren nach Anspruch 11,
**dadurch gekennzeichnet,**
**daß** der gleiche Schacht nochmals oder ein anderer ausgewählter Schacht entsprechend angefahren und bedient wird, bis der Einlagerungsauftrag abgeschlossen ist.

13. Verfahren nach Anspruch 11 oder 12, mit Hilfe eines Kommissionierautomaten zwischen zumindest zwei gegenüberliegenden voneinander beabstandeten Regalen,
**dadurch gekennzeichnet,**
**daß** bei einer Bedienung eines gegenüberliegenden Regals (3) der Tisch (15) seitenverkehrt betrieben und der Artikelanschlag (18) des zweite Endlos-Antriebs (17) vor einem Einschieben der Artikel in den Schacht auf der anderen Tischquerseite positioniert wird.

14. Verfahren nach einem der Ansprüche 7 bis 13,
**dadurch gekennzeichnet,**
**daß** durch das Regalbediengerät (10) ausgewählte Artikel aus Schächten (4) ausgelagert und an anderer Regalstelle eingelagert, d.h. ausgewählte Artikel im Regal (3) umgelagert werden.

## Claims

1. An automatic order-picking machine (1) for automatic order picking of articles (2), having at least one shelf (3) comprising superposed arrays of chutes (4) or trays disposed side by side and extending transversely across the shelf and sloping downwardly in their longitudinal direction, in which chutes articles ofthe same kind can be stored one behind the other such that when the lowermost article is removed or picked out, the other articles in the chute (4) or on the tray can slide down to replace it, and having a shelf-serving device (10) individually assigned to said shelf (3) and exhibiting a computer-controlled control unit (11) which can be positioned at each end of the chute and is responsible for both picking out and putting in articles (2), and said control unit (11) of the shelf-serving device can be moved in the longitudinal direction ofthe shelf (3) by a computer-controlled first drive (12) and can be vertically adjusted by a computer-controlled second drive (13) and comprises a table (15) extending transversely to the longitudinal direction of the shelf and on which articles (2) to be put in or articles (2) which have been picked out can be interim-stored in the transverse direction of the shelf, which table (15) can be moved in the transverse direction of the shelf by a computer-controlled third drive (14), and in the table (15) there are provided a first roller-guided, computer-controlled, continuous drive (16) extending in the transverse direction ofthe shelf and a further computer-controlled drive extending in the transverse direction ofthe shelf for horizontal transportation of articles (2) along the table (15), said first continuous drive (16) being provided for the picking articles out of a selected chute (4) and said other drive being provided for putting articles into a selected chute (4), **characterized in that** said other drive is in the form of a roller-guided, second continuous drive (17) and is disposed in the center of the transverse table (15), whilst the first continuous drive (16) is disposed on each side ofthe second continuous drive (17) symmetrically to said second continuous drive (17).

2. An automatic order-picking machine as claimed in claim 1, **characterized in that** the second continuous drive (17) has at least one projecting stop member (18), preferably three stop members (18) equally distributed on the continuous loop of the second continuous drive (17) and, in particular, the second continuous drive (17) is a chain drive, and said stop member (18) is attached vertically to a chain shackle (19) ofthe chain drive, said stop member (18) is divided at its center ie the two halves of the stop member are located laterally ofthe chain drive and, in particular, the first continuous drive (16) comprises one or more synchronous flat belt drives or synchronous round belt drives.

3. An automatic order-picking machine as defined in claim 1 or claim 2, **characterized in that** two opposite rows of shelves are provided which are set at a distance from each other in a straight line, the shelf-serving device (10) being in a longitudinally central position in the lane between said rows of shelves where it can be moved or displaced in the longitudinal direction of the shelf (3) and that the first and second continuous drives (16, 17) are reversible drives which can be independently operated in both transverse directions ofthe shelf.

4. An automatic order-picking machine as defined in any one of claims 1 to 3, **characterized in that** the transverse table (5) has at at least one end a centrally disposed finger (20), in which the first and second continuous drives (16, 17) are also integrated, which finger (20) is capable of engaging the bottom surface of an article when the selected lowermost article (2) in a chute is to be picked out or an article is to be taken from the table (15) for insertion into a selected chute (4), and that the bottom of a chute (4) or each tray in the shelf (3) has a central opening (21) at the bottom end of the chute, facing the shelf-serving device, which opening is slightly larger than the finger (20) when viewed from above, and when the shelf-serving device (20) is positioned at the lower end of a chute, the finger (20) can move into the opening without touching it, ie it can be moved up and down in said opening without touching it.

5. An automatic order-picking machine as defined in any one of claims 1 to 4, **characterized in that** the lower end of the chute base has at least one vertical retaining prong (22), which is preferably vertically and/or laterally displaceable, and, in particular, the chute cover (23) is in staggered relationship with the retaining prong (22) on the shelf side and exhibits an upturned edge (24) or in the cover area of a tray there is provided an article depresser which is in staggered relationship with the vertical retaining prong on the shelf side.

6. An automatic order-picking machine as defined in any one of claims 1 to 5, wherein the table (15) has a centering device for the stop members and/or a variable lateral guide for the articles and/or a vertically adjustable article depresser, and particularly the vertically adjustable article depresser and the variable lateral guide for the articles on each side ofthe second continuous drive (17) is an angle-section guide rail (25) and both guide rails (25) can be synchronously or simultaneously displaced with respect to the transverse axis of the table (15).

7. A method of automatically removing articles with the aid of an automatic order-picking machine as defined in any one of claims 1 to 6, in which articles have been stored in adjacent relationship to each other in inclined chutes of the shelf and in each case the lowermost article in the chute is secured against slipping out ofthe chute by the stationary retaining prong at the lower end of the chute, **characterized in that** that the shelf-serving device (10) is moved by a first, second and third computer controlled drive (12, 13, 14) to the lower end ofthe selected chute (4) and the finger (20) is positioned below the end ofthe chute underneath the opening (21) and that when the first continuous drive (16) is switched on and running continuously, the control unit (11) with its table (15) including finger (20) is raised and lowered by the second drive (13) to such an extent that the finger (20) enters the opening (21) without touching it and engages the lowermost article in the chute from underneath and raises and lowers it in such a manner that the second lowest articles in the chute (4) and any other articles in the chute slip down as far as the retaining prong (22) and the previously lowermost article in the chute is transported by the first continuous drive (16) in the transverse direction along the table (15) away from the shelf (3) to a stop member (18) on the other side of the table, which stop member has been positioned by operation of the second continuous drive (17) in the direction of transport and is disposed centrally between the two first continuous drive units, after which the control unit (11) is moved by at least the third drive (14) to a neutral position remote from the shelf.

8. A method as defined in claim 7, **characterized in that** the same chute is again served or another selected chute is served in the same way until the pick-out job is completed or the table is completely loaded with picked-out articles.

9. A process as defined in claim 7 or claim 8, **characterized in that** the shelf-serving device (10) is moved to a discharge point (30) located on the long side ofthe shelf (3) or between two shelves (3), at which discharge point the article stored on the table (15) is transferred by operation of the first or second continuous drive (16, 17) to a receptacle and/or a conveyor belt or an exit chute (5).

10. A method as defined in any one of claims 7 to 9, carried out with the aid of an automatic order-picking machine between at least two opposing shelves set at a distance from each other, **characterized in that** when an opposing shelf (3) is served, at least the first continuous drive (16) is reversed and the stop member (18) ofthe second continuous drive (17) is positioned at the other short side of the table.

11. A method of automatically storing articles with the aid of an automatic order-picking machine as defined in any one of claims 1 to 6, **characterized in**
**that** the stop member (18) of the second continuous drive (17) is positioned on the table top that is remote from the shelf centrally in the direction of transport between the drive parts ofthe first continuous drive and is optionally centered by a closed centering unit,
**that** the articles to be inserted and located in succession on the table top are oriented in a central position by adjustment ofthe position of the lateral guide for the articles and are vertically guided by the article depresser,
**that** the articles are pushed forward on the table (15) by the stop member (18) to an inserting position near the shelf, the finger (20) being kept free from articles,
**that** the finger (20) is moved to a position underneath the opening (21) of the selected chute (4) by operation ofthe first, second and third drives 12, 13, 14),
**that** the second drive (13) raises the finger (20) plus the table such that the finger passes into the opening (21) without touching it and thus engages the lowermost article in the chute from below and raises the same in such a manner that the second lowest article and any other articles in the chute (4) slip down to the prepositioned articles to be inserted and located on the table (15) and pushes these articles against the stop member (18),
**that** the second continuous drive (17) is switched to put-in operation and moves the stop member (18) in the direction of the shelf (3) to a position directly in front of the end of the finger on the table top to push the articles to be inserted into the selected chute,
**that** the finger plus table is lowered by the second drive (13), and passes into the opening (21) without touching it, and the articles (2) in the chute (4) slip against the retaining prong (22), after which the control unit (11) is moved by at least the third drive (14) to a neutral position remote from the shelf.

12. A method as defined in claim 11, **characterized in that** the same chute is again served or another selected chute is served in a similar manner until the put-in job is completed.

13. A method as defined in claim 11 or claim 12, carried out with the aid of an automatic order-picking machine located between at least two opposing shelves set at a distance from each other, **characterized in that** when an opposing shelf (3) is served, the table (15) is operated in reverse and the stop member (18) of the second continuous drive (17) is positioned on the other short side of the table before the article is inserted into the chute.

14. A method as defined in any one of claims 7 to 13, **characterized in that** selected articles are picked out from chutes (4) by the shelf-serving device (10) and are inserted at some other shelf site, ie selected articles are cross-loaded within the shelf (3).

## Revendications

1. Automate (1) pour préparer de façon automatique des commandes pour articles (2) comportant :
- au moins une étagère (3) pourvue de couloirs (4) disposés l'un sur l'autre et l'un à coté de l'autre ou pourvue de fonds à compartiments ; lesquels couloirs ou fonds s'étendent en direction transversale par rapport à l'étagère tout en étant inclinés dans leurs direction longitudinale par rapport à l'horizontale et dans lesquels fonds à casiers on peut stocker à chaque fois des articles de type identique l'un derrière l'autre,
- où, lorsqu'on retire ou enlève un article le plus bas dans le couloir, les articles dans le couloir (4) ou dans le fond à casiers peuvent suivrent, et
- avec un appareil de desserte d'étagère (10) séparé, associé à l'étagère (3), comportant une unité de commande (11) positionnée à chaque extrémité de couloir , commandée par ordinateur et destinée à enlever ou amener des articles (2)
- et où l'unité de commande (1) de l'appareil de desserte d'étagère peut être déplacée en direction longitudinale de l'étagère par un premier entraînement (12) commandé par ordinateur et peut être réglé en hauteur par un deuxième entraînement (13) commandé par ordinateur
- et où l'unité de commande (1) comporte une table (15) s'étendant de façon transversale par rapport à la direction longitudinale de l'étagère (3), sur laquelle table on peut entreposer en direction de l'étagère des articles (2) déposés ou enlevés,
- où la table (15) peut être déplacée de façon transversale par un troisième entraînement (14) commandé par ordinateur en direction transversale de l'étagère et
- où on a réalisé dans la table (15) un premier entraînement sans fin (16) s'étendant en direction transversale de l'étagère et guidé par rouleaux et commandé par ordinateur et sur la table (15) un autre entraînement , commandé par ordinateur, pour le transport horizontal d'articles (2) s'étendant en direction transversale de l'étagère, et
- où on a prévu le premier entraînement sans fin (16) pour enlever des articles d'un couloir (4) choisi et l'autre entraînement est prévu pour déposer des articles dans un couloir choisi,
**caractérisé en ce que** l'autre entraînement est réalisé en tant que deuxième entraînement sans fin (17) guidé par rouleaux et est disposé de façon médiane dans la table s'étendant de façon transversale lorsque le premier entraînement sans fin (16) est disposé de façon symétrique des deux cotés du deuxième entraînement sans fin (17).

2. Automate pour préparer de façon automatique des commandes pour articles selon la revendication 1, **caractérisé en ce que** le deuxième entraînement sans fin (17) comporte au moins une butée (18) d'articles en saillie et de préférence trois butées d'articles (18) reparties de façon régulière sur la circonférence sans fin, que notamment le deuxième entraînement sans fin (17) est un entraînement par chaîne, où la butée d'articles (18) est fixée de façon particulière sur une patte de chaîne (19) de l'entraînement par chaîne, et où la butée d'articles (18) est divisée au milieu, c'est à dire où les deux moitiés de butée sont situées latéralement par rapport à l'entraînement par chaîne, et où notamment le premier entraînement sans fin est un ou plusieurs entraînement par courroie plate synchrones ou des entraînements par courroie ronde synchrones.

3. Automate pour préparer de façon automatique des commandes pour articles selon la revendication 1 ou 2, **caractérisé en ce qu'**on a prévu deux rangées d'étagères droites , faisant faces, éloignées l'une de l'autre, où l'appareil (10) de desserte d'étagère est disposé au milieu en direction longitudinale du couloir d'étagères situé entre les deux rangées d'étagère et où ledit appareil peut être déplacé ou glissé en direction longitudinale de l'étagère (3) et **en ce que** le premier et deuxième entraînement sans fin (16, 17) sont des entraînements à inversion que l'on peut faire fonctionner de façon indépendante l'un de l'autre dans les deux directions transversales de l'étagère.

4. Automate pour préparer de façon automatique des commandes pour articles selon une des revendications 1 à 3, **caractérisé en ce que** la table (15), s'étendant de façon transversale, comporte au moins à une extrémité au milieu un doigt de desserte dans lequel est intégré un premier et un deuxième entraînement sans fin (16, 17) où on peut introduire le doigt de desserte (20) dans le coté de fond de cet article pendant l'enlèvement d'un article (2) choisi du coté inférieur du couloir ou pendant le dépôt d'un article à partir de la table (15) vers un couloir (4) choisi et **en ce que** le fond d'un couloir ou chaque fond plat de l'étagère (3) présente sur le coté inférieur du couloir tourné vers l'appareil de desserte d'étagères un évidement central (21) qui est un peu plus grand , vu du dessus, que le doigt de desserte où on peut recevoir , pour un appareil de desserte d'étagères , positionné près de l'extrémité du couloir inférieur, le doigt de desserte (20) sans le toucher dans l'évidement, c'est à dire que l'on peut faire passer doigt de desserte de façon sans le toucher vers le haut et vers le bas.

5. Automate pour préparer de façon automatique des commandes pour articles selon une des revendications 1 à 4, **caractérisé en ce que** l'extrémité inférieure du fond de couloir comporte au moins une pointe de maintient (22) debout qui peut être réglé de préférence en hauteur et / ou latéralement, et **en ce que** notamment la paroi (23) de couverture de couloir est décalée en arrière , du coté de l'étagère, par rapport à la pointe de maintient et comporte au bord (24) formant un angle vers le haut et **en ce qu'**on a prévu dans la zone de plafond d'un fond plat un dispositif de maintient de niveau haut formant un angle vers le haut et décalé vers l'arrière du coté de l'étagère par rapport à la pointe de maintient debout.

6. Automate pour préparer de façon automatique des commandes pour articles selon une des revendications 1 à 5, **caractérisé en ce que** la table (15) comporte un dispositif de centrage de butée d'articles et / ou un guidage latéral réglable pour les articles et / ou un dispositif de maintient de niveau haut réglable en hauteur pour les articles, où notamment le dispositif de maintient de niveau haut d'articles, réglable en hauteur, et le guidage latéral d'articles, réglable en hauteur, sont un rail de guidage (25) formant un angle sur chaque coté du deuxième entraînement sans fin (17), et **en ce que** les deux rails de guidage (25) peuvent être réglés de façon synchrone ou simultanée par rapport à l'axe transversal de la table (15).

7. Procédé pour enlever automatiquement des articles du stock au moyen d'un automate de préparation de commandes selon une des revendications 1 à 6, où on a stocké des articles de façon contiguë l'un derrière l'autre dans des couloirs inclinés de l'étagère et où on bloque à l'extrémité inférieure du couloir, à chaque fois, l'article le plus en bas de couloir contre une sortie du couloir au moyen d'une pointe de maintient fixe,
**caractérisé en ce que** l'on déplacé l'appareil de commande d'étagère (10) au moyen d'un premier, deuxième et troisième entraînement commandés par ordinateurs vers l'extrémité inférieure du couloir choisi (4) et qu'on positionne le doigt de desserte (20) en dessous de l'extrémité du couloir en dessous de l'évidement et **en ce que** l'on lève et descend au moyen du deuxième entraînement (13) , lorsque le premier entraînement (16) sans fin fonctionnant en permanence est en service, l'unité de commande avec la table (15) et le doigt de desserte (20) de manière telle que le doigt de desserte (20) arrive sans toucher à travers l'évidement (21) et saisit à ce moment, du coté du fond, par en dessous l'article le plus bas du couloir et le soulève, puis le baisse de manière à ce que le deuxième article le plus bas dans le couloir, éventuellement avec d'autres articles présents dans le couloir, glisse jusqu'à la pointe (22) de maintient et **en ce que** l'on transporte l'article, qui était auparavant le plus bas, au moyen du premier entraînement (16) sans fin en direction transversale loin de l'étagère et qu'on le place ensuite sur la table (15) jusqu'à une butée d'articles positionnée sur l'autre table au moyen d'un service de réglage du deuxième entraînement (17) sans fin , disposé dans la direction de transport au milieu entre les deux premiers parties d'entraînement sans fin, l'unité de commande (11) est ensuite déplacée au moyen du troisième entraînement (14) vers une position neutre loin de l'étagère.

8. Procédé selon la revendication 7, **caractérisé en ce que** l'on approche et dessert encore une fois le même couloir ou un autre couloir choisi jusqu'à ce que la commande d'enlèvement et de préparation de commande soit terminée et que la table soit remplie complètement d'articles enlevés.

9. Procédé selon la revendication 7 ou 8, **caractérisé en ce que** l'appareil de commande d'étagère (10) est déplacé vers un endroit de transfert (3) situé du coté longitudinal de l'étagère (3) ou entre deux étagères, à l'endroit duquel on sort , en actionnant le premier ou deuxième entraînement sans fin (16, 17), les articles entreposés sur la table (15) vers un conteneur de réception et / ou un convoyeur à bande ou un couloir de sortie (5).

10. Procédé selon une des revendications 7 à 9, de préparation d'articles au moyen d'un automate de préparation d'articles entre au moins deux étagères opposées et dont l'une est espacée de l'autre, **caractérisé en ce que** l'on inverse au moins , lorsqu'on fait fonctionner l'étagère opposée , la marche du premier entraînement sans fin (16) et **en ce que** l'on positionne la butée d'articles (18) du deuxième entraînement sans fin (17) sur l'autre coté transversal de la table.

11. Procédé pour déposer automatiquement des articles au moyen d'un automate de préparation d'articles selon une des revendications 1 à 6, **caractérisé en ce**
- **que** l'on positionne et centre éventuellement au moyen d'un centreur fermé la butée d'articles (18) du deuxième entraînement sans fin sur le coté supérieur de la table, loin de l'étagère, en direction de transport au milieu entre les deux parties d'entraînement du premier entraînement sans fin,
- en ce que l'on oriente de façon médiane les articles à déposer l'un derrière l'autre sur le coté supérieur de la table en réglant le guidage latéral d'article et en ce que l'on guide les articles en hauteur au moyen d'un dispositif de maintien de niveau haut,
- en ce que l'on déplace les articles, au moyen d'une butée d'articles (18), vers l'avant dans une position de dépôt sur la table près de l'étagère, où on maintient le doigt de desserte (20) sans qu'il touche des articles,
- en ce que l'on positionne le doigt de desserte (20) en dessous de l'évidement (21) du couloir choisi en actionnant le premier, deuxième et troisième entraînement,
- en ce que l'on soulève le doigt de desserte (20) avec la table jusqu'à ce que le doigt de desserte arrive sans toucher à travers l'évidemment (21) et saisit à ce moment, du coté du fond, par en dessous l'article le plus bas du couloir et le soulève de manière telle que le deuxième article (4) le plus bas dans le couloir glisse sur la table (15) jusqu'aux articles prépositionnés à déposer et pousse ces articles contre la butée (18) d'articles,
- en ce que le deuxième entraînement sans fin (17) fonctionne en mode de réglage et déplace sur le coté supérieur de la table la butée d'articles (18) en direction de l'étagère (3) directement jusqu'à l'extrémité du doigt de desserte et pousse en même temps les articles à déposer dans le choisi,
- en ce que l'on règle, au moyen du deuxième entraînement (13), le doigt de desserte avec la table vers le bas, en ce que le doigt arrive sans toucher, à travers l'évidement (21) et que les articles (2) glissent dans le couloir (4) contre la pointe (22), selon quoi on déplace l'unité de commande (11) au moins par le troisième entraînement (14) vers une position neutre loin de l'étagère.

12. Procédé selon la revendication 11, **caractérisé en ce que** l'on approche et dessert encore une fois le même couloir ou un autre couloir choisi jusqu'à ce que la commande de dépôt soit terminée.

13. Procédé selon une des revendications 11 ou 12, de préparation d'articles au moyen d'un automate entre au moins deux étagères opposées et dont l'une est espacée de l'autre,
**caractérisé en ce que** l'on inverse latéralement le fonctionnement de la table (15), lorsqu'on fait fonctionner l'étagère opposée , et **en ce que** l'on positionne , avant l'introduction des articles dans le couloir, la butée d'articles (18) du deuxième entraînement sans fin (17) sur l'autre coté transversal de la table.

14. Procédé selon une des revendications 7 à 13, **caractérisé en ce que** l'on retire du couloir (4) des articles choisis au moyen de l'appareil de commande d'étagère (10) et qu'on les déposent à d'autres endroits de l'étagère, c'est à dire que l'on change la place des articles choisis sur l'étagère (3).
